(19) **Europäisches Patentamt / European Patent Office / Office européen des brevets**

(11) **EP 3 196 809 A1**

(12) **EUROPEAN PATENT APPLICATION**

published in accordance with Art. 153(4) EPC

(43) Date of publication:
**26.07.2017 Bulletin 2017/30**

(21) Application number: **15879628.4**

(22) Date of filing: **04.08.2015**

(51) Int Cl.:
**G06N 3/08** *(2006.01)*

(86) International application number:
**PCT/CN2015/086011**

(87) International publication number:
**WO 2016/119429 (04.08.2016 Gazette 2016/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **26.01.2015 CN 201510036813**

(71) Applicant: **Huawei Technologies Co. Ltd.
Shenzhen, Guangdong 518129 (CN)**

(72) Inventors:
• **CHEN, Jia
Shenzhen
Guangdong 518129 (CN)**
• **ZENG, Jia
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR TRAINING PARAMETER SET IN NEURAL NETWORK**

(57)    The present invention discloses a system and a method for training a parameter set in a neural network. The system includes: a main-control-node set, used for controlling a training process and storing a data set and a parameter set that are used for training, where the main-control-node set includes M main control nodes, every two of the M main control nodes are in a communication connection, and at least one main control node of the M main control nodes is configured to back up the parameter set; and N training-node sets, where the training-node set includes multiple training nodes, and the training node is configured to perform training according to a data set and a parameter set that are delivered by the main-control-node set, and send a training result to a corresponding main control node. The system and the method in embodiments of the present invention can avoid a case in which entire training fails when a main control node is disabled, which improves reliability of a training process, and enhances training efficiency by performing training in parallel by configuring multiple training-node sets.

FIG. 1

EP 3 196 809 A1

**Description**

**TECHNICAL FIELD**

The present invention relates to the data processing field, and in particular, to a system and a method for training a parameter set in a neural network in the data processing field.

**BACKGROUND**

A neural network is a mathematical model in which information is processed by simulating a cerebral neural synaptic structure, is abstraction, simplification, and simulation of a human brain, and may reflect a basic property of the human brain. The neural network includes a large quantity of nodes (which are also referred as neurons) and weighted connections between the nodes. Each node represents a specific output function, called an excitation function, and a connection between every two nodes represents a weighted value for a signal passing through the connection, where the weighted value is called a weight. The neural network may be expressed by using a mathematical function $Y= f(X,W)$, where $X$ represents an input of a network, Y represents an output of the network, and $W$ represents a parameter set of the network.

The following describes an issue about training of the neural network briefly by using supervised learning as an example. The training of the neural network is to seek for the parameter set $W$ of the foregoing function. A training process of the neural network is to offer a data set $D=\{(X_1,Y_1),(X_2,Y_2),...,(X_N,Y_N)\}$ for training, define a value function of each training data $(X_i,Y_i)$ as

$$E_i = \frac{1}{2}(Y_i - f(X_i,W))^2$$

and determine $W$, so as to minimize a value of $\frac{1}{N}\sum_{i=1}^{N} E_i$

Deep learning is one of training methods for the neural network. Currently, deep learning can have been well used for resolving actual application problems such as speech recognition, image recognition, and text processing. Generally, the neural network needs to be trained by using a great deal of training data, so as to ensure that an operation result of the neural network reaches a certain degree of accuracy. Correspondingly, a larger training data scale indicates a larger calculation amount and a longer time required for training. To improve a training speed of the neural network, coprocessors such as a graphic processing unit (Graphic Processing Unit, GPU) are widely applied to calculation of training of deep learning. However, these coprocessors have relatively small memory, and cannot accommodate a weighted parameter set of a large-scale neural network.

Moreover, according to the existing technical solution, a main control node sends copies of a neural network to operation nodes and instructs the operation nodes to perform training. Each operation node is equipped with at least a GPU to perform operation processing. The main control node regularly queries statuses of the operation nodes when the operation nodes perform the training, and updates weighted parameter of the copies of the neural network on the main control node and the operation nodes after the operation nodes are in a stop state. In the prior art, numerous calculation nodes are used for cooperatively training a large-scale neural network, and in a conventional synchronous updating manner, all calculation nodes in a system can only simultaneously perform training based on a same parameter set $W$, so that overall performance of the system is limited by a slowest node and a network bandwidth of the system. When one or some nodes are disabled, an entire training process is severely affected.

Therefore, an existing training system of a neural network has poor reliability and supports only one main control node, and when the main control node is disabled, entire training fails. Moreover, operation nodes of the existing training system can simultaneously perform training only based on a same parameter set $W$, and a scale and overall performance of the system are limited by memory sizes of the main control node and the operation nodes.

**SUMMARY**

Embodiments of the present invention provides a system and a method for training a parameter set in a neural network, which can improve reliability of a training process of a neural network and training efficiency.

According to a first aspect, a system for training a parameter set in a neural network is provided, where the system includes:

a main-control-node set, where the main-control-node set includes M main control nodes, the main-control-node set is used for controlling a process of training the parameter set in the neural network and storing a data set and a parameter set that are used in the process of training the parameter set, the data set includes multiple data subsets, the parameter set includes multiple parameter subsets, the multiple parameter subsets are stored separately in different main control nodes, a set of parameter subsets stored in all main control nodes in the main-control-node set is the parameter set, every two of the M main control nodes are in a communication connection, and at least one main control node of the M main control nodes is configured to back up the parameter set, where M is a positive integer greater than 1; and

N training-node sets, where each of the N training-node sets is in a communication connection with the main-control-node set, the training-node set includes multiple training nodes, the training node is configured to receive the data subset and the parameter set that are delivered by the main-control-node set, train, according to the received data subset and parameter set, a parameter subset for which the training node is responsible, and send a training result to a main control node storing the parameter subset, where N is a positive integer greater than 1, data subsets used by any two of the N training-node sets for training are different, and a set of parameter subsets trained by all training nodes in each training-node set is the parameter set.

With reference to the first aspect, in a first possible implementation manner of the first aspect, the training result is a parameter variation, obtained by the training node by training, according to the received data subset and parameter set, the parameter subset for which the training node is responsible, of the parameter subset for which the training node is responsible, and the main control node in the main-control-node set is further configured to:

    receive the parameter variation sent by the training node; and
    update, according to the parameter variation, the parameter subset stored in the main control node.

With reference to the first aspect or the first possible implementation manner of the first aspect, in a second possible implementation manner of the first aspect, the main-control-node set is specifically used for:

    dividing the parameter set into multiple parameter subsets;
    storing the multiple parameter subsets separately in different main control nodes, where the set of the parameter subsets stored in all of the main control nodes in the main-control-node set is the parameter set; and
    determining each training node in the N training-node sets according to sizes of the multiple parameter subsets.

With reference to any one of the first aspect and the first and second possible implementation manners of the first aspect, in a third possible implementation manner of the first aspect, the main control node is specifically configured to:

    update, at a first time point according to a parameter variation sent by a first training node of a first-training-node set, the parameter subset stored in the main control node; and
    update, at a second time point according to a parameter variation sent by a second training node of a second-training-node set, the parameter subset stored in the main control node.

With reference to any one of the first aspect and the first to third possible implementation manners of the first aspect, in a fourth possible implementation manner of the first aspect, the main-control-node set is specifically used for:

    determining, according to an accuracy of the training result, whether to stop the process of training the parameter set.

With reference to any one of the first aspect and the first to fourth possible implementation manners of the first aspect, in a fifth possible implementation manner of the first aspect, the training node is further configured to:

    receive an instruction sent by the main-control-node set and stop the process of training the parameter set.

With reference to any one of the first aspect and the first to fifth possible implementation manners of the first aspect, in a sixth possible implementation manner of the first aspect, every two training nodes in a same training-node set are in a communication connection.
According to a second aspect, a method for training a parameter set in a neural network is provided, where the method is performed by the main-control-node set in the system for training a parameter set in a neural network according to any one of claims 1 to 7, where the system further includes N training-node sets, where the main-control-node set includes M main control nodes, and every two of the M main control nodes are in a communication connection, where M is a positive integer greater than 1, and N is a positive integer greater than 1, and the method includes:

    storing, by the main-control-node set, a data set and a parameter set that are used for training, where the data set includes multiple data subsets, the parameter set includes multiple parameter subsets, the multiple parameter subsets are stored separately in different main control nodes, a set of parameter subsets stored in all main control nodes in the main-control-node set is the parameter set, and at least one main control node of the M main control nodes is configured to back up the parameter set;
    delivering, by a main control node in the main-control-node set, a data subset and a parameter subset to a training node that is responsible for training the parameter subset stored in the main control node; and
    receiving, by the main control node in the main-control-node set, a training result sent by the training node, where the training node belongs to a training-node set, the training-node set is in a communication connection with the main-control-node set, the training-node set includes multiple training nodes, and the training result is obtained by performing, according to the received data subset and parameter set that are delivered by the main-control-node set, training.

With reference to the second aspect, in a first possible implementation manner of the second aspect, the training result is a parameter variation, obtained by the training node by training, according to the received data subset and parameter set that are delivered by the main-control-node set, the parameter subset for which the training node is responsible, of the parameter subset, and the method further includes:

receiving, by the main control node in the main-control-node set, the parameter variation sent by the training node; and
updating, by the main control node in the main-control-node set according to the parameter variation, the parameter subset stored in the main control node.

With reference to the second aspect or the first possible implementation manner of the second aspect, in a second possible implementation manner of the second aspect, the storing, by the main-control-node set, a data set and a parameter set that are used for training includes:

dividing, by the main-control-node set, the parameter set into multiple parameter subsets; and
storing the multiple parameter subsets separately in different main control nodes, where the set of the parameter subsets stored in all of the main control nodes in the main-control-node set is the parameter set; and
the method further includes:

determining, by the main-control-node set, each training node in the N training-node sets according to sizes of the multiple parameter subsets.

With reference to any one of the second aspect and the first and second possible implementation manners of the second aspect, in a third possible implementation manner of the second aspect, the updating, by the main control node in the main-control-node set according to the parameter variation, the parameter subset stored in the main control node includes:

updating, by the main control node in the main-control-node set at a first time point according to a parameter variation sent by a first training node of a first-training-node set, the parameter subset stored in the main control node; and
updating, by the main control node in the main-control-node set at a second time point according to a parameter variation sent by a second training node of a second-training-node set, the parameter subset stored in the main control node.

With reference to any one of the second aspect and the first to third possible implementation manners of the second aspect, in a fourth possible implementation manner of the second aspect, the method further includes:

determining, by the main-control-node set according to an accuracy of the training result, whether to stop the process of training the parameter set.

With reference to any one of the second aspect and the first to fourth possible implementation manners of the second aspect, in a fifth possible implementation manner of the second aspect, at least one main control node stores and is responsible for one of the parameter subsets, correspondingly, at least two training nodes are responsible for one of the parameter subsets, the at least two training nodes belong to different training-node sets, data subsets used by any two of the multiple training-node sets for training are different, and a set of parameter subsets trained by all training nodes in each training-node set is the parameter set.

With reference to any one of the second aspect and the first to fifth possible implementation manners of the second aspect, in a sixth possible implementation manner of the second aspect, every two training nodes in a same training-node set are in a communication connection.

Based on the foregoing technical solutions, according to the system and the method for training a parameter set in a neural network provided in the embodiments of the present invention, a training process is controlled by a main-control-node set including multiple main control nodes, every two of which are in a communication connection, which can avoid a case in which entire training fails when a main control node is disabled, and can improve reliability of the training process; and a parameter set is trained in parallel by configuring multiple training-node sets, which can improve training efficiency.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic block diagram of a system for training a parameter set in a neural network according to an embodiment of the present invention;

FIG. 2 is a schematic block diagram of a calculation device according to an embodiment of the present invention;

FIG. 3 is a schematic diagram of a working process of a system for training a parameter set in a neural network according to an embodiment of the present invention;

FIG. 4 is a schematic flowchart of a training process according to an embodiment of the present invention; and

FIG. 5 is a schematic flowchart of a method for training a parameter set in a neural network according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

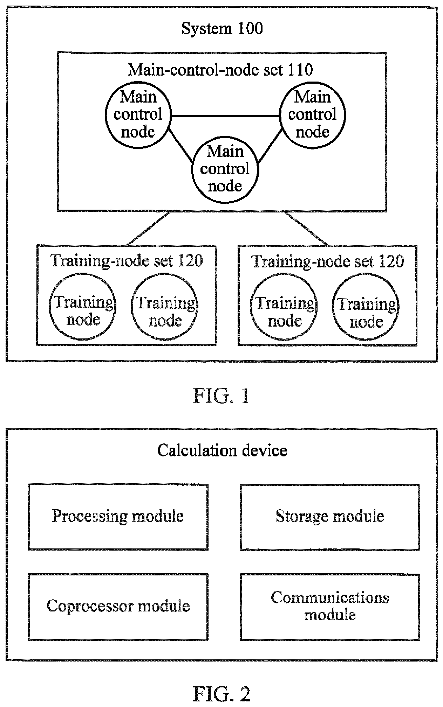

FIG. 1 shows a schematic block diagram of a system 100 for training a parameter set in a neural network according to an embodiment of the present invention. As shown in FIG. 1, the system 100 includes:

a main-control-node set 110, where the main-control-node set 110 includes M main control nodes, the main-control-node set 110 is used for controlling a process of training the parameter set in the neural network and storing a data set and a parameter set that are used in the process of training the parameter set, the data set includes multiple data subsets, the parameter set includes multiple parameter subsets, the multiple parameter subsets are stored separately in different main control nodes, a set of parameter subsets stored in all main control nodes in the main-control-node set 110 is the parameter set, every two of the M main control nodes are in a communication connection, and at least one main control node of the M main control nodes is configured to back up the parameter set, where M is a positive integer greater than 1; and

N training-node sets 120, where each of the N training-node sets 120 is in a communication connection with the main-control-node set 110, the training-node set 120 includes multiple training nodes, the training node is configured to receive the data subset and the parameter set that are delivered by the main-control-node set 110, train, according to the received data subset and parameter set, a parameter subset for which the training node is responsible, and send a training result to a main control node storing the parameter subset, where N is a positive integer greater than 1, data subsets used by any two of the N training-node sets 120 for training are different, and a set of parameter subsets trained by all training nodes in each training-node set 120 is the parameter set.

Therefore, according to the system for training a parameter set in a neural network provided in this embodiment of the present invention, a training process is controlled by a main-control-node set including multiple main control nodes, every two of which are in a communication connection, which can avoid a case in which entire training fails when a main control node is disabled, and can improve reliability of the training process; and a parameter set is trained in parallel by configuring multiple training-node sets, which can improve training efficiency.

Specifically, the system 100 for training a parameter set includes a main-control-node set 110 and at least two training-node sets 120. The main-control-node set 110 includes at least two main control nodes, every two of the main control nodes are in a communication connection, and at least one main control node is configured to back up the parameter set, which can improve reliability of a training process. The training-node set 120 may be obtained by means of division performed by the main-control-node set 110 according to a data processing scale and performance (such as a memory size) of a training node for forming the training-node set 120.

The system 100 for training a parameter set in this embodiment of the present invention may be applied to a training process of a neural network. Inputs of the training process of the neural network are a neural network function $Y = f(X,W)$, an initial parameter set, and a data set D for training, and an output is a parameter set $W$ of a neural network obtained after training. The main-control-node set 110 is used for controlling a training process, for example, the main-control-node set 110 controls the training process to start or end, controls a data subset used by each training-node set, and determines each training node in a training-node set. The main-control-node set 110 is further used for storing a data set D and a parameter set $W$ that are used in the training process. The parameter set $W$ includes multiple parameter subsets, the multiple parameter subsets are stored separately in different main control nodes, and a set of parameter subsets stored in all main control nodes in the main-control-node set 110 is the parameter set $W$.

The training node in the training-node set 120 is configured to receive a data subset delivered by the main-control-node set 110 and a current parameter set $W$, and train a parameter subset for which the training node is responsible according to the received data subset and current parameter set $W$, and send a parameter variation $\Delta W$, which may be obtained by performing training according to the data subset and the current parameter set *W* and is used for updating, to the main control node. In the training process, data subsets used by any two of the N training-node sets 120 for training are different, and a set of parameter subsets trained by all training nodes in each training-node set 120 is the parameter set. That is, multiple training-node sets 120 process different data subsets in parallel. For a same parameter subset, multiple training nodes train the parameter subset at a same time point, which can improve efficiency of the training process.

Therefore, according to the system for training a parameter set in a neural network provided in this embodiment of the present invention, a training process is controlled by a main-control-node set including multiple main control nodes, every two of which are in a communication connection, which can avoid a case in which entire training fails when a main control node is disabled, and can improve reliability of the training process; and a parameter set is trained in parallel by configuring multiple training-node sets, which can improve training efficiency.

In this embodiment of the present invention, a data set includes multiple data subsets, and a parameter set includes multiple parameter subsets. Data subsets used by any two of the N training-node sets 120 for training are different. At least two training nodes train a same parameter subset, and the two training nodes belong to different training-node sets 120.

Specifically, the system 100 for training a parameter set includes more than one training-node set 120. In this case, a data set stored in the main-control-node set 110 includes multiple data subsets, and during training, the main-control-node set 110 delivers different data subsets to different training-node sets 120. A parameter set stored in the main-control-node set 110 includes multiple parameter subsets, and main control nodes in the main-control-node set 110 separately store and are responsible for maintaining different parameter subsets. A training node, responsible for a parameter subset, in the training-node set 120 receives, from a corresponding main control node, the parameter subset which the main control node stores and is responsible for maintaining, and a set of parameter subsets received from multiple main control nodes is the parameter set. According to the data subset and the parameter set, a training node trains a parameter subset for which the training node is responsible. At least two training nodes train a same parameter subset, and these two training nodes belong to different training-node sets 120. That is, when there are multiple training-node sets 120, the multiple training-node sets 120 process different data subsets in parallel. For a same parameter subset, multiple training nodes train the parameter subset at a same time point, which can improve efficiency of the training process.

It should be understood that, a quantity of the main control nodes in the main-control-node set 110 in the system 100 shown in FIG. 1, a quantity of the training-node sets 120, and a quantity of training nodes in a training-node set 120 are all exemplary. The main-control-node set 110 includes more than one main control node. The system 100 includes at least two training-node sets 120. The training-node set 120 includes more than one training node.

Therefore, according to the system for training a parameter set in a neural network provided in this embodiment of the present invention, a training process is controlled by a main-control-node set including multiple main control nodes, every two of which are in a communication connection, which can avoid a case in which entire training fails when a main control node is disabled, and can improve reliability of the training process. Moreover, a parameter set is trained in parallel by configuring multiple training-node sets, which can improve training efficiency.

The main control nodes in the main-control-node set 110 and the training nodes in the training-node set 120 are all calculation devices. FIG. 2 shows a schematic block diagram of a calculation device according to an embodiment of the present invention, As shown in FIG. 2, the calculation device may include a processing module, a storage module, a coprocessor module for calculation (such as, a graphic processing unit (Graphic Processing Unit, GPU), an Intel many integrated core (Intel Many Integrated Core, Intel MIC) processor, or a field-programmable gate array (Field-Programmable Gate Array, FPGA)), and a communications module configured to communicate with a main control node in a training node or communicate inside the main-control-node set 110.

Optionally, as an embodiment, at a same time point, a parameter set used by at least one of the N training-node sets 120 for training is different from the parameter set currently stored in the main-control-node set 110.

Alternatively, optionally, as an embodiment, the main control node is specifically configured to:

update, at a first time point according to a parameter variation sent by a first training node of a first-training-node set, the parameter subset stored in the main control node; and
update, at a second time point according to a parameter variation sent by a second training node of a second-training-node set, the parameter subset stored in the main control node.

Specifically, all training-node sets 120 in the system 100 run independently and in parallel and do not affect each other. Disability of any training-node set 120 does not affect continuous training of the entire system 100. At a time point of the training process, at least one of the N training-node sets 120 calculates a difference between a used parameter set and the parameter set currently stored in the main-control-node set 110. In other words, at a time point of the training process, a parameter set used by at least one of the N training-node sets 120 for training is different from a parameter set used by another training-node set 120 for training. That is, the main-control-node set 110 updates parameter sets $W$ asynchronously. The main control node updates, at the first time point according to the parameter variation sent by the first training node of the first-training-node set, the parameter subset stored in the main control node; and updates, at the second time point according to the parameter variation sent by the second training node of the second-training-node set, the parameter subset stored in the main control node. At a time point, a current parameter set $W$ of the main-control-node set 110 may be already different from a parameter set $W$ currently used by the training-node set 120 for the training.

Optionally, as an embodiment, the main-control-node set 110 may be specifically used for:

> dividing the parameter set into multiple parameter subsets;
> storing the multiple parameter subsets separately in different main control nodes, where the set of the parameter subsets stored in all of the main control nodes in the main-control-node set 110 is the parameter set; and
> determining each training node in the N training-node sets 120 according to sizes of the multiple parameter subsets.

Specifically, at the start of the training, the main-control-node set 110 performs initialization work, for example, the main-control-node set 110 obtains the training-node sets 120 by means of division, configures the data set and the parameter set for training, and initializes an original model. The configuring a parameter set $W$ for training is specifically dividing the parameter set $W$ into multiple parameter subsets $W_1, W_2, ..., W_k$. Each main control node is responsible for maintaining one or more parameter subsets. If a main control node $M_j$ is responsible for storing, updating, and maintaining a parameter subset $W_i$, $M_j$ is referred to as a sink main node of $W_i$.

According to a size of the parameter set $W$ and a memory (memory of a coprocessor of a training node) size of each training node for forming the training-node set 120, the main-control-node set 110 divides all training nodes configured to form the training-node set 120. Generally, a larger size of the parameter subset indicates a stronger capability of a training node that needs to be allocated to the parameter subset. It is assumed that there are totally $P$ training-node sets 120 that are recorded as $C^1, C^2, ..., C^P$. Each training node is responsible for at least one parameter subset, and the training-node sets 120 cooperatively store and process an entire copy of the parameter set $W$.

Optionally, as an embodiment, the main-control-node set 110 backs up the parameter set by using a disk array RAID0/1/5/6 or erasure coding.

Specifically, to ensure reliability of the system 100, the main-control-node set 110 may back up the parameter set by using an encoding method of RAID0/1/5/6 or erasure coding (Erasure Coding). In this way, in a case in which some main control nodes are disabled, the system 100 can recover the disabled parameter subset by using a corresponding decoding operation, so as to maintain normal running. It should be understood that, the reliability of the system 100 may be further ensured by using another encoding method, which is not limited in this embodiment of the present invention.

Optionally, as an embodiment, the training node may be specifically configured to:

> receive an instruction sent by the main-control-node set 110 and stop the process of training the parameter set.

Specifically, for a training node in a training-node set $C^k$, it is required to access a sink main node of a parameter subset for which the training node is responsible, and download a copy of a latest parameter subset. A set of all latest parameter subsets acquired by all training nodes of the training-node set $C^k$ by using a communications network is a latest parameter set, which is recorded as $W^k$. Different training-node sets may acquire latest parameter sets $W$ from the main-control-node set 110 at different time points. However, the parameter set $W$ constantly changes. Therefore, at a same time point, copies, used by different training-node sets for calculation, of the parameter set $W$ may be different.

If training needs to be performed, the training node in the training-node set $C^k$ further needs to acquire some data of the data set from the main-control-node set 110, that is, a data subset. Data subsets acquired by training nodes in a same training-node set are the same. Further, the training node performs training according to the parameter set $W^k$ and the data subset, so as to obtain a parameter variation $\Delta W_i^k$ corresponding to the parameter subset $W_i$ for which the training node is responsible. The training node sends the parameter variation $\Delta W_i^k$ obtained by training, to a main control node responsible for a corresponding parameter subset $W_i$, that is, a sink main node. A set of parameter variations $\Delta W_i^k$ obtained by calculation by all training nodes in the training-node set $C^k$ is recorded as $\Delta W^k$. A manner in which the training node acquires the parameter subset and data from the main-control-node set 110 is not limited in this embodiment of the present invention.

In the training process, the training node performs the training by constantly and repeatedly receiving a parameter set and a data subset and until receiving from the main-control-node set 110 a training stop instruction sent by the main-control-node set 110, the training node stops the process of training the parameter set.

Optionally, as an embodiment, if in the training process, parameters of the training nodes in the training-node set are correlated, it is necessary for the training nodes to exchange data with each other. In this case, every two training nodes in a same training-node set may be in a communication connection.

Optionally, as an embodiment, the training result is a parameter variation, obtained by the training node by training, according to the received data subset and parameter set, the parameter subset for which the training node is responsible, of the parameter subset for which the training node is responsible, and the main control node in the main-control-node set 110 is further configured to:

receive the parameter variation sent by the training node; and
update, according to the parameter variation, the parameter subset stored in the main control node.

Specifically, the main control node in the main-control-node set 110 receives a parameter variation $\Delta W_i^{\prime k}$, which is obtained by the training node by performing training according to the data set and the parameter set and used for updating, from a training node in a training-node set $C^k$, so as to update the parameter subset $W_i$ for which the main control node in the main-control-node set is responsible. That is, after receiving an entire parameter set variation $\Delta W^k$ from a training-node set $C^k$, the main-control-node set updates the parameter set $W$ of the neural network. The main-control-node set updates the parameter set $W$ asynchronously, that is, at a same time point, a current parameter set $W$ of the main-control-node set may be already different from a parameter set $W^k$ used by a training-node set $C^k$ in a training process. Such an asynchronous updating manner may make full use of training capabilities of all training-node sets. In addition, a specific method for updating the parameter set $W$ by the main-control-node set is not limited in this embodiment of the present invention.

Optionally, as an embodiment, the main-control-node set is specifically used for:

determining, according to an accuracy of the training result, whether to stop the process of training the parameter set.

Specifically, the main-control-node set 110 determines, according to whether the training result is accurate, whether the current training should be stopped. For example, the main-control-node set 110 may determine, when a change $\Delta W^k$ of a parameter set $W$ is less than a threshold, to stop the training process; or determine, when an updated parameter set $W$ makes a change value of a result $Y$, obtained by calculation according to a mathematical function $Y = f(X,W)$ of a parameter set $W$ and a neural network, less than a threshold, to stop the training process, which is not limited in this embodiment of the present invention.

The following describes a working process of the system 100 provided in this embodiment of the present invention in detail with reference to a specific example.

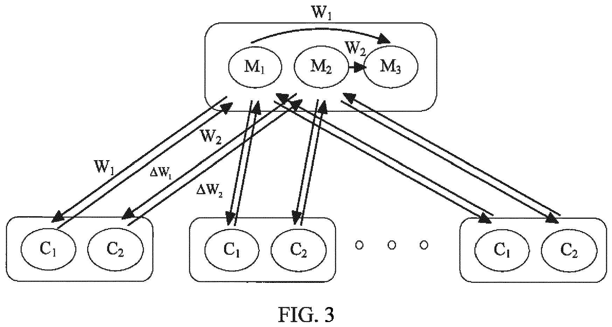

The system 100 provided in this embodiment of the present invention is applied to an image classification system based on a deep convolutional neural network, and performs training by using an optimization algorithm based on mini-batch stochastic gradient descent (Mini-batch Stochastic Gradient Descent). An input $X$ of the deep convolutional neural network is an image, an output $Y$ is an image category, and a data set of a training process is $D = \{(X_i, Y_i)\}$. A parameter set of the convolutional neural network is $W$, and parameters included in a parameter set trained by the system are a mini-batch size $m$ and a learning rate $\alpha$. FIG. 3 is a schematic diagram of a working process of a data processing system according to an embodiment of the present invention. A parameter set $W$ of a deep convolutional neural network is divided into two parameter subsets $W_1$ and $W_2$. A main-control-node set includes three main control nodes $M_1$, $M_2$, and $M_3$. The main control node $M_1$ is a sink main node of the parameter subset $W_1$, the main control node $M_2$ is a sink main node of the parameter subset $W_2$, and the main control node $M_3$ stores $W_3 = W_1 \oplus W_2$. $\oplus$ in this embodiment of the present invention represents exclusive OR training. Each training-node set $C^k$ includes two training nodes $C^k_1$ and $C^k_2$ that are responsible for training of the parameter subsets $W_1$ and $W_2$ respectively.

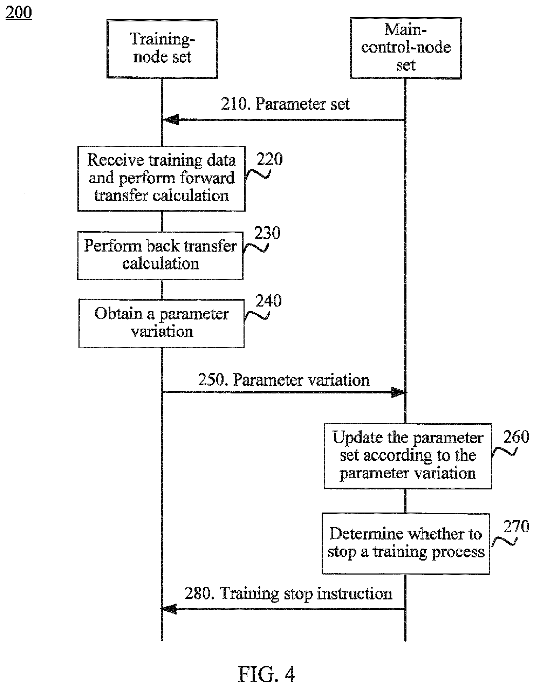

FIG. 4 is a schematic flowchart of a training process 200 according to an embodiment of the present invention. The training process 200 includes:

210: A system 100 includes P training-node sets $C^k$ (k=1, 2,..., p). Training nodes $C^k_1$ and $C^k_2$ download respectively from main control nodes $M_1$ and $M_2$ latest parameter subsets $W_1$ and $W_2$, which are recorded as $W_1^k$ and $W_2^k$. If the main control node $M_1$ is disabled, the training node $C^k_1$ may download the parameter subset $W_2$ from the main control node $M_2$, download $W_3 = W_1 \oplus W_2$ from a main control node $M_3$, and then obtain a parameter subset $W_1^k$ by training $W_2 \oplus W_3$. If the main control node $M_2$ is disabled, the training node $C^k_2$ may download the parameter subset $W_1$ from the main control node $M_1$, download $W_3 = W_1 \oplus W_2$ from the main control node $M_3$, and then obtain a parameter subset $W_2^k$ by training $W_1 \oplus W_3$

220: Both of the training nodes $C^k_1$ and $C^k_2$ receive a same batch of training data { $D_i^k = (X_i^k, Y_i^k)$

| i=1,2,...,m} from a main-control-node set, and perform forward transfer training based on the parameter subsets $W_1^k$ and $W_2^k$ respectively. In a training process, the training nodes $C^k_1$ and $C^k_2$ may communicate with each other, so as to perform necessary data exchange.

230: For each training data $D_i^k = (X_i^k, Y_i^k)$, where i = 1,2,...,m, the training nodes $C^k_1$ and $C^k_2$ separately obtain errors $E_i^k = \frac{1}{2}(Y_i^k - f(X_i^k, W^k))^2$ corresponding to the training nodes by training, where i = 1,2,...,m, and then perform back transfer training by using an error back propagation (Error Back Propagation, BP) algorithm, so as to obtain $\Delta W_{i,1}^k = \frac{\partial E_i^k}{\partial W_1^k}$ and $\Delta W_{i,2}^k = \frac{\partial E_i^k}{\partial W_2^k}$ by training respectively. In the training process, the training nodes $C^k_1$ and $C^k_2$ may communicate with each other, so as to perform necessary data exchange.

240: The training nodes $C^k_1$ and $C^k_2$ obtain parameter variations $\Delta W_1^k = \frac{1}{m}\sum_{i=1}^{m} \Delta W_{i,1}^k$ and $\Delta W_2^k = \frac{1}{m}\sum_{i=1}^{m} \Delta W_{i,2}^k$ respectively.

250: The training nodes $C^k_1$ and $C^k_2$ upload $\Delta W_1^{\prime k}$ and $\Delta W_2^{\prime k}$ to the main control nodes $M_1$ and $M_2$ respectively. The training nodes $C^k_1$ and $C^k_2$ repeat steps 210 to 250 until receiving a training stop instruction from the main-control-node set.

260: The main-control-node set includes the main control nodes $M_1$ and $M_2$. Step 260 is performed in parallel with steps 210 to 250. The main control nodes $M_1$ and $M_2$ receive the parameter variations $\Delta W_1^{\prime k}$ and $\Delta W_2^{\prime k}$ from the training nodes $C^k_1$ and $C^k_2$ of training-node sets respectively. According to the parameter variations $\Delta W_1^{\prime k}$ and $\Delta W_2^{\prime k}$, the main control nodes $M_1$ and $M_2$ update the parameter subsets $W_1$ and $W_2$ according to the following formulas: $W_1 = W_1 - \alpha \Delta W_1^{\prime k}$ and $W_2 = W_2 - \alpha \Delta W_2^{\prime k}$ respectively. The main control nodes $M_1$ and $M_2$ transit updated parameter subsets $W_1$ and $W_2$ to the main control node $M_3$. The main control node $M_3$ updates $W_3$ according to the following formula: $W_3 = W_1 \oplus W_2$.

270: The main-control-node set determines, according to an accuracy of a training result, whether to stop the training process. If a training stop condition is not met, steps 210 to 270 are repeated; or if a training stop condition is met, step 280 is performed.

280: The main-control-node set sends the training stop instruction to the training-node sets.

Therefore, according to the system for training a parameter set in a neural network provided in this embodiment of the present invention, a training process is controlled by a main-control-node set including multiple main control nodes, every two of which are in a communication connection, which can avoid a case in which entire training fails when a main control node is disabled, and can improve reliability of the training process; and moreover, a parameter set is trained in parallel by configuring multiple training-node sets, which can improve training efficiency.

The following describes a method 200 for training a parameter set in a neural network corresponding to an embodiment of the present invention in detail.

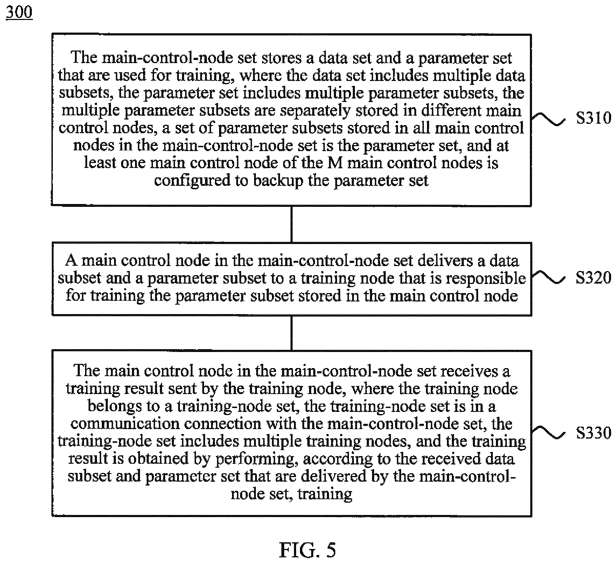

FIG. 5 shows a method 300 for training a parameter set in a neural network according to an embodiment of the present invention. The method 300 is performed by a main-control-node set of the foregoing system for training a parameter set in a neural network. The system further includes N training-node sets. The main-control-node set includes M main control nodes, and every two of the M main control nodes are in a communication connection, where M is a positive integer greater than 1, and N is a positive integer greater than 1. The method 300 includes:

S310: The main-control-node set stores a data set and a parameter set that are used for training, where the data set includes multiple data subsets, the parameter set includes multiple parameter subsets, the multiple parameter subsets are stored separately in different main control nodes, a set of parameter subsets stored in all main control nodes in the main-control-node set is the parameter set, and at least one main control node of the M main control nodes is configured to back up the parameter set.

S320: A main control node in the main-control-node set delivers a data subset and a parameter subset to a training node that is responsible for training the parameter subset stored in the main control node.

S330: The main control node in the main-control-node set receives a training result sent by the training node, where the training node belongs to a training-node set, the training-node set is in a communication connection with the main-control-node set, the training-node set includes multiple training nodes, and the training result is obtained by performing, according to the received data subset and parameter set that are delivered by the main-control-node set, training.

Therefore, according to the method for training a parameter set in a neural network provided in this embodiment of the present invention, a training process is controlled by a main-control-node set including multiple main control nodes, every two of which are in a communication connection, which can avoid a case in which entire training fails when a main control node is disabled, and can improve reliability of the training process; and a parameter set is trained in parallel by multiple training-node sets, which can improve training efficiency.

Optionally, as an embodiment, the training result is a parameter variation, obtained by the training node by training, according to the received data subset and parameter set that are delivered by the main-control-node set, the parameter subset for which the training node is responsible, of the parameter subset, and the method 300 further includes:

> receiving, by the main control node in the main-control-node set, the parameter variation sent by the training node; and
> updating, by the main control node in the main-control-node set according to the parameter variation, the parameter subset stored in the main control node.

Optionally, as an embodiment, the storing, by the main-control-node set, a data set and a parameter set that are used for training includes:

> dividing, by the main-control-node set, the parameter set into multiple parameter subsets; and
> storing the multiple parameter subsets separately in different main control nodes, where the set of the parameter subsets stored in all of the main control nodes in the main-control-node set is the parameter set; and
> the method 300 further includes:
>
> > determining, by the main-control-node set, each training node in the N training-node sets according to sizes of the multiple parameter subsets.

Optionally, as an embodiment, the updating, by the main control node in the main-control-node set according to the parameter variation, the parameter subset stored in the main control node includes:

> updating, by the main control node in the main-control-node set at a first time point according to a parameter variation sent by a first training node of a first-training-node set, the parameter subset stored in the main control node; and

updating, by the main control node in the main-control-node set at a second time point according to a parameter variation sent by a second training node of a second-training-node set, the parameter subset stored in the main control node.

Optionally, as an embodiment, the method 300 further includes:

> determining, by the main-control-node set according to an accuracy of the training result, whether to stop the process of training the parameter set.

Optionally, as an embodiment, at least one main control node stores and is responsible for one of the parameter subsets, correspondingly, at least two training nodes are responsible for one of the parameter subsets, the at least two training nodes belong to different training-node sets, data subsets used by any two of the multiple training-node sets for training are different, and a set of parameter subsets trained by all training nodes in each training-node set is the parameter set.

Optionally, as an embodiment, every two training nodes in a same training-node set are in a communication connection.

Therefore, according to the method for training a parameter set in a neural network provided in this embodiment of the present invention, a training process is controlled by a main-control-node set including multiple main control nodes, every two of which are in a communication connection, which can avoid a case in which entire training fails when a main control node is disabled, and can improve reliability of the training process; and moreover, training is performed in parallel by configuring multiple training-node sets, which can improve training efficiency.

It should be understood that, in the embodiments of the present invention, "Y corresponding to X" represents that Y and X are correlated, and Y may be determined according to X. It should be further understood that, determining Y according to X does not mean that Y is determined only according to X, but means that Y may be further determined according to X and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A system for training a parameter set in a neural network, wherein the system comprises:

   a main-control-node set, wherein the main-control-node set comprises M main control nodes, the main-control-node set is used for controlling a process of training the parameter set in the neural network and storing a data set and a parameter set that are used in the process of training the parameter set, the data set comprises multiple data subsets, the parameter set comprises multiple parameter subsets, the multiple parameter subsets are stored separately in different main control nodes, a set of parameter subsets stored in all main control nodes in the main-control-node set is the parameter set, every two of the M main control nodes are in a communication connection, and at least one main control node of the M main control nodes is configured to back up the parameter set, wherein M is a positive integer greater than 1; and
   N training-node sets, wherein each of the N training-node sets is in a communication connection with the main-control-node set, the training-node set comprises multiple training nodes, the training node is configured to receive the data subset and the parameter set that are delivered by the main-control-node set, train, according to the received data subset and parameter set, a parameter subset for which the training node is responsible, and send a training result to a main control node storing the parameter subset, wherein N is a positive integer greater than 1, data subsets used by any two of the N training-node sets for training are different, and a set of parameter subsets trained by all training nodes in each training-node set is the parameter set.

2. The system according to claim 1, wherein the training result is a parameter variation, obtained by the training node by training, according to the received data subset and parameter set, the parameter subset for which the training node is responsible, of the parameter subset for which the training node is responsible, and the main control node in the main-control-node set is further configured to:

> receive the parameter variation sent by the training node; and
> update, according to the parameter variation, the parameter subset stored in the main control node.

3.  The system according to claim 1 or 2, wherein the main-control-node set is specifically used for:

> dividing the parameter set into multiple parameter subsets;
> storing the multiple parameter subsets separately in different main control nodes, wherein the set of the parameter subsets stored in all of the main control nodes in the main-control-node set is the parameter set; and
> determining each training node in the N training-node sets according to sizes of the multiple parameter subsets.

4.  The system according to any one of claims 1 to 3, wherein the main control node is specifically configured to:

> update, at a first time point according to a parameter variation sent by a first training node of a first-training-node set, the parameter subset stored in the main control node; and
> update, at a second time point according to a parameter variation sent by a second training node of a second-training-node set, the parameter subset stored in the main control node.

5.  The system according to any one of claims 1 to 4, wherein the main-control-node set is specifically used for:

> determining, according to an accuracy of the training result, whether to stop the process of training the parameter set.

6.  The system according to any one of claims 1 to 5, wherein the training node is further configured to:

> receive an instruction sent by the main-control-node set and stop the process of training the parameter set.

7.  The system according to any one of claims 1 to 6, wherein every two training nodes in a same training-node set are in a communication connection.

8.  A method for training a parameter set in a neural network, wherein the method is performed by the main-control-node set in the system for training a parameter set in a neural network according to any one of claims 1 to 7, wherein the system further comprises N training-node sets, wherein the main-control-node set comprises M main control nodes, and every two of the M main control nodes are in a communication connection, wherein M is a positive integer greater than 1, and N is a positive integer greater than 1, and the method comprises:

> storing, by the main-control-node set, a data set and a parameter set that are used for training, wherein the data set comprises multiple data subsets, the parameter set comprises multiple parameter subsets, the multiple parameter subsets are stored separately in different main control nodes, a set of parameter subsets stored in all main control nodes in the main-control-node set is the parameter set, and at least one main control node of the M main control nodes is configured to back up the parameter set;
> delivering, by a main control node in the main-control-node set, a data subset and a parameter subset to a training node that is responsible for training the parameter subset stored in the main control node; and
> receiving, by the main control node in the main-control-node set, a training result sent by the training node, wherein the training node belongs to a training-node set, the training-node set is in a communication connection with the main-control-node set, the training-node set comprises multiple training nodes, and the training result is obtained by performing, according to the received data subset and parameter set that are delivered by the main-control-node set, training.

9.  The method according to claim 8, wherein the training result is a parameter variation, obtained by the training node by training, according to the received data subset and parameter set that are delivered by the main-control-node set, the parameter subset for which the training node is responsible, of the parameter subset, and the method further comprises:

> receiving, by the main control node in the main-control-node set, the parameter variation sent by the training node; and
> updating, by the main control node in the main-control-node set according to the parameter variation, the parameter subset stored in the main control node.

10. The method according to claim 8 or 9, wherein the storing, by the main-control-node set, a data set and a parameter set that are used for training comprises:

> dividing, by the main-control-node set, the parameter set into multiple parameter subsets; and

storing the multiple parameter subsets separately in different main control nodes, wherein the set of the parameter subsets stored in all of the main control nodes in the main-control-node set is the parameter set; and the method further comprises:

determining, by the main-control-node set, each training node in the N training-node sets according to sizes of the multiple parameter subsets.

11. The method according to any one of claims 8 to 10, wherein the updating, by the main control node in the main-control-node set according to the parameter variation, the parameter subset stored in the main control node comprises:

updating, by the main control node in the main-control-node set at a first time point according to a parameter variation sent by a first training node of a first-training-node set, the parameter subset stored in the main control node; and updating, by the main control node in the main-control-node set at a second time point according to a parameter variation sent by a second training node of a second-training-node set, the parameter subset stored in the main control node.

12. The method according to any one of claims 8 to 11, wherein the method further comprises:

determining, by the main-control-node set according to an accuracy of the training result, whether to stop the process of training the parameter set.

13. The method according to any one of claims 8 to 12, wherein at least one main control node stores and is responsible for one of the parameter subsets, correspondingly, at least two training nodes are responsible for one of the parameter subsets, the at least two training nodes belong to different training-node sets, data subsets used by any two of the multiple training-node sets for training are different, and a set of parameter subsets trained by all training nodes in each training-node set is the parameter set.

14. The method according to any one of claims 8 to 13, wherein every two training nodes in a same training-node set are in a communication connection.

## System 100

### Main-control-node set 110

Main control node

Main control node

Main control node

### Training-node set 120

Training node

Training node

### Training-node set 120

Training node

Training node

FIG. 1

## Calculation device

Processing module

Storage module

Coprocessor module

Communications module

FIG. 2

FIG. 3

200

```
┌─────────────┐                              ┌─────────────┐
│  Training-  │                              │    Main-    │
│  node set   │                              │ control-node│
│             │                              │     set     │
└──────┬──────┘                              └──────┬──────┘
       │            210. Parameter set              │
       │◄─────────────────────────────────────────┤
       │                                            │
┌──────┴──────────────┐  220                        │
│ Receive training data│  ∼                         │
│ and perform forward  │                            │
│ transfer calculation │                            │
└──────┬──────────────┘                             │
┌──────┴──────────────┐  230                        │
│ Perform back transfer│  ∼                         │
│     calculation      │                            │
└──────┬──────────────┘                             │
┌──────┴──────────────┐  240                        │
│  Obtain a parameter  │  ∼                         │
│      variation       │                            │
└──────┬──────────────┘                             │
       │        250. Parameter variation            │
       ├──────────────────────────────────────────►│
       │                              ┌─────────────┴──────┐  260
       │                              │ Update the parameter│  ∼
       │                              │  set according to the│
       │                              │ parameter variation │
       │                              └─────────────┬──────┘
       │                              ┌─────────────┴──────┐  270
       │                              │ Determine whether to│  ∼
       │                              │ stop a training process│
       │                              └─────────────┬──────┘
       │        280. Training stop instruction       │
       │◄──────────────────────────────────────────┤
       │                                            │
```

FIG. 4

300

| The main-control-node set stores a data set and a parameter set that are used for training, where the data set includes multiple data subsets, the parameter set includes multiple parameter subsets, the multiple parameter subsets are separately stored in different main control nodes, a set of parameter subsets stored in all main control nodes in the main-control-node set is the parameter set, and at least one main control node of the M main control nodes is configured to backup the parameter set | ⟿ S310 |

| A main control node in the main-control-node set delivers a data subset and a parameter subset to a training node that is responsible for training the parameter subset stored in the main control node | ⟿ S320 |

| The main control node in the main-control-node set receives a training result sent by the training node, where the training node belongs to a training-node set, the training-node set is in a communication connection with the main-control-node set, the training-node set includes multiple training nodes, and the training result is obtained by performing, according to the received data subset and parameter set that are delivered by the main-control-node set, training | ⟿ S330 |

FIG. 5

# INTERNATIONAL SEARCH REPORT

| International application No. |
| --- |
| PCT/CN2015/086011 |

**A. CLASSIFICATION OF SUBJECT MATTER**

G06N 3/08 (2006.01) i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: neural network, train, parameter, subset, group, main node, coprocessor, parallel, educate, subclass, sub node

**C. DOCUMENTS CONSIDERED TO BE RELEVANT**

| Category* | Citation of document, with indication, where appropriate, of the relevant passages | Relevant to claim No. |
| --- | --- | --- |
| PX | CN 104463322 A (INSPUR BEIJING ELECTRIC INFORMATION INDUSTRY CO., LTD.) 25 March 2015 (25.03.2015) description, paragraphs [0030] to [0035] | 1-14 |
| PA | CN 104463324 A (CHANGSHA MASHA ELECTRONIC TECHNOLOGY CO., LTD) 25 March 2015 (25.03.2015) the whole document | 1-14 |
| Y | CN 104035751 A (TENCENT INC.) 10 September 2014 (10.09.2014) description, paragraphs [0072] to [0095] and figures 4 and 5 | 1-14 |
| Y | CN 102735747 A (UNIV NANJING AERONAUTICS) 17 October 2012 (17.10.2012) description, paragraphs [0012] to [0019] and figure 2 | 1-14 |
| A | CN 103077347 A (CHINA ELECTRIC POWER RES INST et al.) 01 May 2013 (01.05.2013) the whole document | 1-14 |

☒ Further documents are listed in the continuation of Box C.　　☒ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
| --- | --- |
| 26 September 2015 | 28 October 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>　　　　ZHANG, Xia<br><br>Telephone No. (86-10) 61648105 |

Form PCT/ISA/210 (second sheet) (July 2009)

**INTERNATIONAL SEARCH REPORT**

| International application No. |
| --- |
| PCT/CN2015/086011 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | US 2004133531 A1 (CHEN, DINGDING et al.) 08 July 2004 (08.07.2004) the whole document | 1-14 |
| A | WO 0126026 A2 (UNIVERSITY OF FLORIDA) 12 April 2001 (12.04.2001) the whole document | 1-14 |

Form PCT/ISA /210 (continuation of second sheet) (July 2009)

**INTERNATIONAL SEARCH REPORT**
Information on patent family members

International application No.

PCT/CN2015/086011

| Patent Documents referred in the Report | Publication Date | Patent Family | Publication Date |
|---|---|---|---|
| CN 104463322 A | 25 March 2015 | None | |
| CN 104463324 A | 25 March 2015 | None | |
| CN 104035751 A | 10 September 2014 | None | |
| CN 102735747 A | 17 October 2012 | None | |
| CN 103077347 A | 01 May 2013 | None | |
| US 2004133531 A1 | 08 July 2004 | CA 2512640 A1 | 29 July 2004 |
| | | GB 2411503 A | 31 August 2005 |
| | | BR 0317938 A | 29 November 2005 |
| | | AU 2003299896 A1 | 10 August 2004 |
| | | WO 2004063769 A2 | 29 July 2004 |
| | | MX PA05007294 A | 30 September 2005 |
| WO 0126026 A2 | 12 April 2001 | AU 7749100 A | 10 May 2001 |

Form PCT/ISA /210 (patent family annex) (July 2009)